# EUROPÄISCHE PATENTSCHRIFT

(11) **EP 0 930 796 B1**
(45) Veröffentlichungstag und Bekanntmachung des Hinweises auf die Patenterteilung: **02.07.2003**
(21) Anmeldenummer: 98440273.5
(22) Anmeldetag: 14.04.1994
(51) Int. Cl.: H04Q 7/38, H04M 17/00

(54) **Mobilfunknetz mit Guthabenkonten**
Mobile radio network with deposit accounts
Réseau radio mobile avec comptes de dépot

(30) Priorität: 16.04.1993 DE 4312362
(43) Veröffentlichungstag der Anmeldung: 21.07.1999
(62) Teilanmeldung aus: 94105746.5
(73) Patentinhaber: T-Mobile Deutschland GmbH, 53227 Bonn (DE)
(72) Erfinder: Unrau, Andreas, 53115 Bonn (DE); Hauser, Hans, 53343 Wachtberg (DE); Czyzewski, Horst, 41516 Grevenbroich (DE)
(74) Vertreter: Riebling, Peter, Dr.-Ing.

(56) Entgegenhaltungen:
- EP-A- 0 459 337
- WO-A-92/06549

## Beschreibung

In einem herkömmlichen Mobilfunknetz, wie z.B. einem nach dem GSM-Standard ausgelegten Mobilfunknetz, werden die vermittelten Rufe über Verrechnungskonten vergebührt. Jedem Mobilfunk-Teilnehmer ist ein solches Verrechnungskonto (laufendes Konto) zugeordnet. In vorgegebenen Zeitabständen z.B. monatlich wird der Sollstand des jeweiligen Verrechnungskontos festgestellt und eine entsprechende Rechnung an den Mobilfunk-Teilnehmer verschickt. Die Verwaltung dieser Verrechnungskonten, die Erstellung der Rechnungen und die anschließende Zahlungsüberwachung erfordern eine aufwendige Rechnerunterstützung. Darüber hinaus erfordert die Verknüpfung der Verwaltung von Teilnehmerdaten und Kontodaten eine technisch aufwendige Verschlüsselung und Sicherung dieser Daten.

Als Variante zu der oben beschriebenen Vergebührung mittels Verrechnungskonten ist eine Vergebührung mittels Guthabenkonten denkbar. Innerhalb eines Mobilfunknetzes werden Guthabenkonten eingerichtet und verwaltet, die jeweils einem Teilnehmerprofil zugeordnet sind. Diese Teilnehmerprofile sind auf solchen Berechtigungskarten gespeichert, die zum anonymen Kauf angeboten werden und den Käufer zur Nutzung von Mobilfunkdiensten berechtigen bis das Gebührenguthaben aufgebraucht wurde. Der Käufer ist somit ein anonymer Mobilfunk-Teilnehmer, dessen Identität nicht in dem Teilnehmerprofil verschlüsselt ist. Das Teilnehmerprofil ermöglicht ihm jedoch den Netzzugang und die Verfügung des Gebührenguthabens.

Die EP-A-0 459 337 offenbart ein Mobilfunksystem, bei dem die Gebührenabrechnung über Verrechnungskonten erfolgt. Dort werden mittels Netzelementen eines intelligenten Netzes Rechnungsbelege am Ende jedes Telefongesprächs erstellt. Eine Gebührenabrechnung über Guthabenkonten ist dort nicht beschrieben.

In der WO-A-92/06549 ist ein schnurloses Telefonsystem mit einem Guthabenspeicher beschrieben, bei dem ein Dekrementierungs-Algorithmus vorgesehen ist, der für eine fortlaufende Guthabenbelastung des Guthabenspeichers mit einer entsprechenden Rate sorgt und den Ruf beendet, falls das Guthaben den Wert Null erreicht. Zuvor wird eine akustische oder optische Warnung ausgegeben. Der Dekrementierungs-Algorithmus wird nicht in einer zentralen Abrechnungseinrichtung sondern individuell in jedem Teilnehmerendgerät ausgeführt, so dass dieses entsprechende Hard- und Softwareeinrichtungen aufweisen muss, um den Dekrementierungs-Algorithmus ausführen zu können. Am Ende jedes Gesprächs werden die aktuellen Guthabendaten vom Teilnehmerendgerät an die Basisstation übertragen, was einen zusätzlichen Übertragungs- und Verwaltungsaufwand in der Basisstation erfordert. Daher ist ein solches Guthabenabrechnungsverfahren für ein öffentliches Mobilfunknetz mit bis zu mehreren Millionen angeschlossenen Teilnehmerendgeräten nicht geeignet.

Aufgabe der Erfindung ist es, ein Mobilfunknetz bereitzustellen, in dem mit einfachen Mitteln eine Vergebührung mittels Guthabenkonten erfolgt.

Diese Aufgabe wird gelöst durch ein Mobilfunknetz mit den Merkmalen nach Anspruch 1.

Eine weitere Aufgabe der Erfindung ist es, ein einfaches Verfahren zur Vergebührung mittels Guthabenkonten in einem solchen Mobilfunknetz bereitzustellen.

Diese Aufgabe wird gelöst durch ein Verfahren mit den Merkmalen nach Anspruch 2.

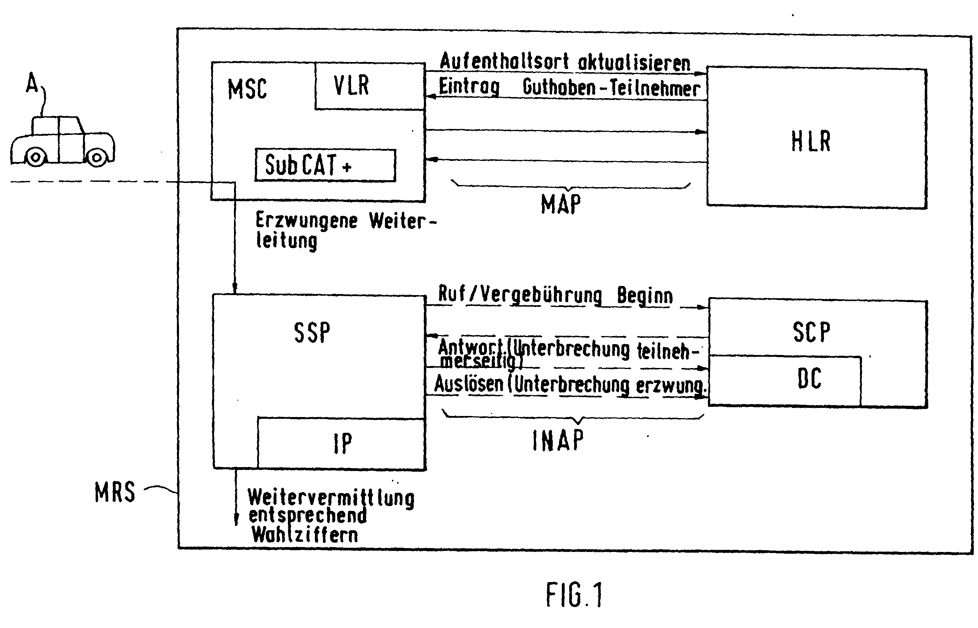

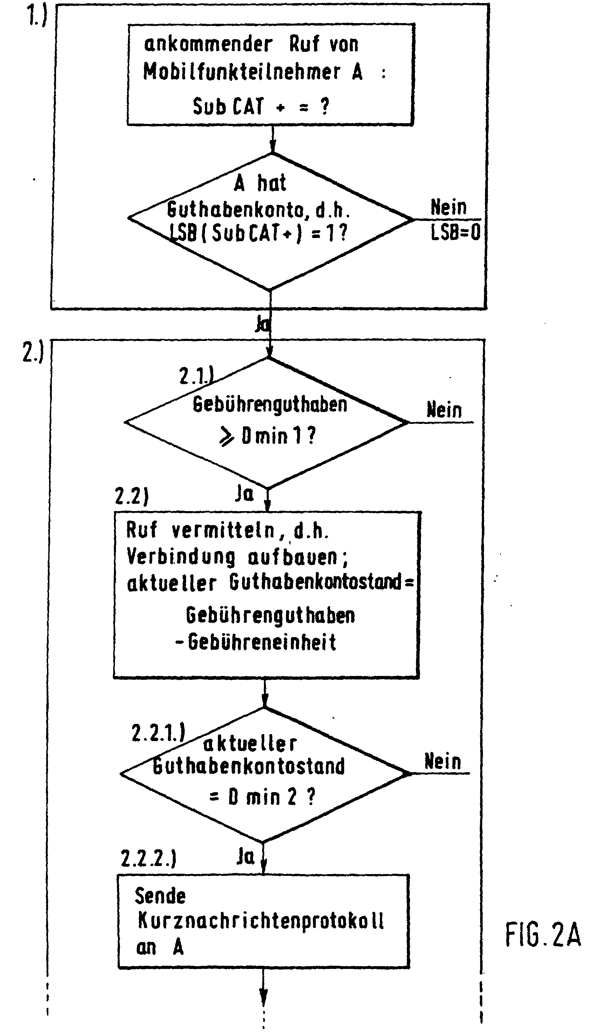

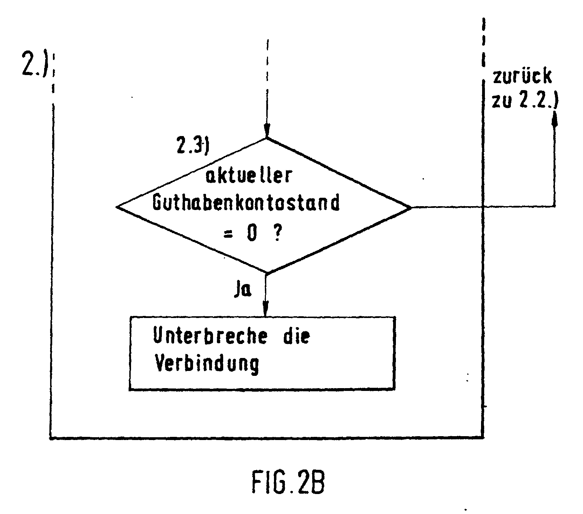

Es folgt unter Zuhilfenahme von Fig. 1, Fig. 2a und Fig. 2b die Beschreibung eines erfindungsgemäß ausgeführten Mobilfunknetzes und eines erfindungsgemäß ausgeführten Vergebührungs-Verfahren in einem derartigen Mobilfunknetz.
- Fig. 1: zeigt schematisch den Aufbau eines Mobilfunknetzes, in dem mittels Guthabenkonten vergebührt wird,
- Fig. 2a und b: zeigen ein Flußdiagramm zur Durchführung eines Verfahrens zur Vergebührung mittels Guthabenkonto.

In Fig. 1 sind schematisch die Elemente eines Mobilfunknetzes MRS dargestellt, mittels denen eine Vermittlung und Vergebührung eines ankommendes Rufes von einem Mobilfunk-Teilnehmer A erfolgt.

Das gezeigte Mobilfunknetz ist ein GSM-Mobilfunknetz. Es enthält eine Funkvermittlungsstelle MSC, die eine Besucher-Teilnehmerdatei VLR und eine Heimat-Teilnehmerdatei HLR verwaltet. Weiterhin enthält das Mobilfunknetz MRS einen Dienstevermittlungspunkt SSP, der mit der Funkvermittlungsstelle verbunden ist und einen Dienstesteuerungspunkt SCP, der mit dem Dienstevermittlungspunkt verbunden ist.

Der Dienstesteuerungspunkt SCP und der Dienstevermittlungspunkt SSP sind Netzelemente eines Intelligenten Netzes, wie sie in dem Artikel "Basis für flexiblere Telecom-Dienste" von B. Eske-Christensen et. al. in der Zeitschrift Funkschau, Ausg. 12/1991 beschrieben sind.

Diese Netzelemente SSP und SCP bilden zusammen mit der Funkvermittlungsstelle MSC eine intelligente Netzstruktur, die Vermittlung und Vergebührung mittels Guthabenkonten ermöglicht. Diese Netzstruktur ist zusätzlich zum bekannten GSM-Mobilfunknetz aufgebaut und solchen Mobilfunk-Teilnehmern zugänglich, die jeweils über ein Guthabenkonto verfügen. Das jeweilige Guthabenkonto wird mittels einer Recheneinheit DC innerhalb des Dienstesteuerungspunktes SCP verwaltet.

Der Dienstesteuerungspunkt SCP ist eine elektronische Steuereinrichtung, die mittels sogenannten INAP-Protokollen (INAP: Intelligent Network Application Part) den Dienstevermittlungspunkt SSP steuert, der beispielsweise eine eigenständige Vermittlungseinrichtung darstellt.

Der Dienstevermittlungspunkt SSP ist hier z.B. mit einer einzigen Funkvermittlungsstelle MSC verbunden. Er kann auch mit mehreren Funkvermittlungsstellen verbunden sein. Die jeweilige Funkvermittlungsstelle MSC weist dem Dienstevermittlungspunkt SSP ankommende Rufe von solchen Mobilfunk-Teilnehmer A zu, die jeweils über ein Guthabenkonto verfügen, das innerhalb des Dienstesteuerungspunktes SCP verwaltet wird. Diese Zuweisung eines solchen Mobilfunk-Teilnehmers, im weiteren Guthaben-Teilnehmer (Debit Subscriber) genannt, erfolgt mittels Auswertung eines vorgegebenen Teilnehmerprofils SubCAT+. Dieses Teilnehmerprofil enthält z.B. ein digitales Wort, das aus einer Bitfolge entsprechend einer herkömmlichen GSM-Teilnehmerkategorie und einem Zusatzbit zusammengesetzt ist. Das Zusatzbit zeigt an, ob der Mobilfunk-Teilnehmer ein Guthaben-Teilnehmer ist. Die verbleibende Bitfolge dient zur üblichen Einstufung des Teilnehmers, d.h. z.B. zur Feststellung der gebuchten Tarifkategorie. Weitere im Teilnehmerprofil enthaltene Information dient zum einen zur Durchführung von üblichen Netzfunktionen, wie z.B. das sogenannte Roaming, und zum anderen zur Bestimmung des Guthabenkontos innerhalb des Dienstesteuerungspunktes SCP. Übliche Netzfunktionen, wie das oben erwähnte Roaming, werden hier mittels Austausch eines sogenannten MAP-Protokolls zwischen den Teilnehmerdateien HLR und VLR durchgeführt. Dazu werden der momentane Aufenthaltsort des Mobilfunk-Teilnehmers erfaßt (Location Update) und die im Teilnehmerprofil enthaltene Teilnehmerkennung in die Teilnehmerdatei VLR, die diesen Aufenthaltsort verwaltet, eingetragen (Insert Subscriber/Debit Subscriber).

Falls ein Ruf eines Guthaben-Teilnehmers A in der Funkvermittlungsstelle MSC festgestellt wird, wird dieser zu dem Dienstevermittlungspunkt SSP weitergeleitet (Forced Routing), der eine Weitervermittlung (Routing according to dialled digits) ausführt. Nach einer erfolgten Vermittlung wird eine Vergebührung ausgelöst (Call Start), bis der vermittelte Ruf teilnehmerseitig unterbrochen wird (Answer) oder der Dienstesteuerungspunkt SCP im Falle eines verbrauchten Guthabens eine Unterbrechung der Verbindung erzwingt (Release).

Der Dienstevermittlungspunkt SSP enthält Mittel zur Signalisierung IP (Intelligent Peripherie), die eine Gebühreninformation des Guthaben-Teilnehmers bewirken, bevor eine solche Unterbrechung der Verbindung erzwungen wird. Derartige Mittel sind z.B. prozessorgesteuerte Schaltungen, die Protokolle gemäß dem sogenannten Kurznachrichtendienst (Short Message Service) erzeugen.

Der Dienstevermittlungspunkt SSP ist in diesem Ausführungsbeispiel als eigenständige Vermittlungseinrichtung ausgeführt. Es ist auch eine Integration des Dienstevermittlungspunktes SSP so denkbar, daß vorteilhaft vermittlungstechnische Baugruppen der Funkvermittlungsstelle MSC für Aufgaben des Dienstevermittlungspunktes SSP genutzt werden.

Die Vermittlung und Vergebührung mittels eines Guthabenkontos wird im weiteren näher anhand der nach Fig. 2 dargestellten Verfahrensschritte beschrieben:

In einem ersten Schritt 1) wird, sobald ein Ruf eines Mobilfunk-Teilnehmers A in einer Funkvermittlungsstelle eintrifft, mittels einem dem Teilnehmer zugeordneten Teilnehmerprofil SubCAT+ geprüft, ob dieser ein Guthabenkonto hat. Die Prüfung des Zusatzbits, das z.B. als geringwertigstes Bit LSB eingeordnet ist, bewirkt eine Selektion der Guthaben-Teilnehmer von den anderen Mobilfunk-Teilnehmern.

In einem zweiten Schritt 2) wird der ankommende Ruf des Guthaben-Teilnehmers wie folgt vermittelt und vergebührt:

Zunächst wird das Gebührenguthaben gemäß 2.1) abgefragt und mit einem vorgegebenen Mindest-Guthaben Dmin1 von z.B. DM 5,--verglichen. Der Ruf wird anschließend nur dann vermittelt, falls das Guthabenkonto nicht weniger als dieses Mindest-Guthaben aufweist, so daß keine Verbindung aufgebaut wird, falls eine baldige Zwangsunterbrechung (Release) droht. Der Teilnehmer A muß dann sein Guthabenkonto z.B. per Überweisung an den Mobilfunknetz-Betreiber auffüllen.

Kann der Ruf vermittelt werden, so folgt die Vergebührung gemäß 2.2). Jeweils nach Abbuchung einer Gebühreneinheit von dem Guthabenkonto wird der aktuelle Guthabenkontostand ermittelt und mit einem Mindestwert Dmin2 gemäß 2.2.1) verglichen. Hat das Guthaben diesen Mindestwert Dmin2 von z.B. DM 10,-- erreicht, wird über die Funkvermittlungsstelle ein Kurznachrichtenprotokoll (short message) an den Teilnehmer A gesendet.

Der Teilnehmer A kann die Nachricht auf dem Anzeigenfeld seines Mobilfunktelefons ablesen und entscheiden, ob er das Gespräch für eine länge Zeitdauer fortsetzt.

Ist kein Guthaben mehr auf dem Guthabenkonto verbucht, so wird gemäß 2.3) die Rufverbindung zwangsweise unterbrochen. Andernfalls wird mit der Vergebührung entsprechend den oben beschriebenen Schritten gemäß 2.2) ff. fortgefahren.

Das vorgestellte Mobilfunknetz und das darin angewendete Verfahren ermöglichen eine intelligente Vermittlung und Vergebührung von Rufen, die von Guthaben-Teilnehmern veranlaßt werden. Die Selektion dieser Rufe und ihre separate Behandlung erspart eine aufwendige Verwaltungstechnik, wie sie bei Rufen von herkömmlichen Teilnehmern notwendig ist. Die Guthaben-Teilnehmer werden im Mobilfunknetz anonym vermittelt und vergebührt. Durch den Aufbau einer separaten intelligenten Netzstruktur sind Erweiterungen von Teilnehmerdiensten, wie z.B. kontinuierliche Mitteilung des aktuellen Kontostand möglich, ohne die herkömmliche Struktur des Mobilfunknetzes oder herkömmliche Netzprotokolle, wie z.B. das MAP-Protokoll, verändern zu müssen.

## Patentansprüche

1. Mobilfunknetz, insbesondere ein GSM-Mobilfunknetz, mit einer Funkvermittlungsstelle (MSC) und mit einer Teilnehmerdatei (HLR, VLR), mittels denen ankommende Rufe von solchen Mobilfunk-Teilnehmern (A), denen jeweils ein Guthabenkonto zugeordnet ist, selektiert werden,
**gekennzeichnet durch**
Netzelemente, die an die Funkvermittlungsstelle (MSC) und die Teilnehmerdatei (VLR) angebunden sind, und
eine in einem dieser Netzelemente angeordnete Recheneinheit, mittels der die selektierten Rufe vergebührt werden, indem fortlaufend eine vorgegebene Gebühreneinheit von dem in der Recheneinheit verwalteten Guthabenkonto abgebucht wird.

2. Verfahren zur Vermittlung und Vergebührung von ankommenden Rufen in einem Mobilfunknetz, insbesondere einem GSM-Mobilfunknetz, mit folgenden Schritten:
- innerhalb einer Funkvermittlungsstelle (MSC) werden ankommende Rufe von solchen Mobilfunk-Teilnehmern (A), denen jeweils ein Guthabenkonto mittels eines vorgegebenen Teilnehmerprofils zugeordnet ist, selektiert; anschließend werden die selektierten Rufe vermittelt und vergebührt indem jeweils:
-- der selektierte Ruf dann vermittelt und eine Verbindung geschaltet werden, falls das Guthabenkonto ein vorgegebenes Gebührenguthaben aufweist,
**dadurch gekennzeichnet, dass**
-- die selektierten Rufe in Netzelementen vermittelt werden, die an die Funkvermittlungsstelle (MSC) und die Teilnehmerdatei (VLR) angebunden sind, und
-- der Ruf mittels einer in einem der Netzelemente eingerichteten Recheneinheit vergebührt wird, indem fortlaufend eine vorgegebene Gebühreneinheit von dem in der Recheneinheit verwalteten Guthabenkonto abgebucht wird und die Verbindung dann unterbrochen wird, falls das Guthabenkonto kein Gebührenguthaben aufweist.

## Claims

1. Mobile radiotelephone network, in particular a GSM mobile radiotelephone network, with a mobile switching centre (MSC) and a subscriber data file (HLR, VLR) for selecting incoming calls from mobile radiotelephone subscribers (A) to whom a credit account has been allocated,
**characterized by**
network elements which are linked to the mobile switching centre (MSC) and the subscriber data file (VLR), and
a data processor located in one of these network elements by means of which the selected calls are charged by continual debit of a specified charge unit from the credit account maintained in the data processor.

2. Method for switching and charging incoming calls in a mobile radiotelephone network, in particular a GSM mobile radiotelephone network, with the following steps: incoming calls from mobile radiotelephone subscribers (A) to whom a credit account has been allocated by means of a specified subscriber profile are selected within a mobile switching centre (MSC);
the selected calls are then switched and charged by: switching and connecting the selected call if the credit account has a specified charging credit,
**characterized in that**
the selected calls are switched in network elements which are linked to the mobile switching centre (MSC) and the subscriber data file (VLR), and
the call is charged by means of a data processor set up in one of the network elements, by continual debit of a specified charge unit from the credit account maintained in the data processor, and the connection is broken off if there is no charging credit in the credit account.

## Revendications

1. Réseau radiotéléphonique mobile, en particulier réseau radiotéléphonique mobile GSM, avec un centre de commutation du service mobile (MSC) et un fichier d'abonnés (HLR, VLR) grâce auxquels on sélectionne des appels entrants d'abonnés mobiles (A) auxquels un compte de créditeur est affecté,
**caractérisé par** des éléments de réseau qui sont reliés au centre de commutation (MSC) et au fichier d'abonnés (VLR), et
par une unité de calcul qui est disposée dans l'un de ces éléments de réseau et à l'aide de laquelle les appels sélectionnés sont facturés, une unité de taxation prédéfinie étant prélevée de manière continue du compte de créditeur géré dans l'unité de calcul.

2. Procédé pour commuter et facturer des appels entrants, dans un réseau radiotéléphonique mobile, en particulier un réseau radiotéléphonique mobile GSM, qui comprend les étapes suivantes :
- à l'intérieur d'un centre de commutation (MSC) sont sélectionnés des appels entrants d'abonnés mobiles (A) auxquels un compte de créditeur est affecté à l'aide d'un profil d'abonnés prédéfini ; puis les appels sélectionnés sont commutés et facturés, grâce au fait qu'à chaque fois :
- l'appel sélectionné est commuté et une liaison est commutée au cas où le compte de créditeur a un crédit de facturation prédéfini,
**caractérisé en ce que**
- les appels sélectionnés sont commutés dans des éléments de réseau qui sont reliés au centre de commutation (MSC) et au fichier d'abonnés (VLR), et
- l'appel est facturé à l'aide d'une unité de calcul installée dans l'un des éléments de réseau, une unité de facturation prédéfinie étant prélevée de manière continue du compte de créditeur géré dans l'unité de calcul, et la liaison étant interrompue au cas où ce compte ne présente pas de crédit de facturation.
